# EUROPEAN PATENT APPLICATION

(11) **EP 1 162 810 A2**
(43) Date of publication of application: **12.12.2001**
(21) Application number: 01304889.7
(22) Date of filing: 05.06.2001
(51) Int. Cl.: H04L 29/06, G06F 17/30

(54) **Data distribution device and method**

(30) Priority: 07.06.2000 JP 2000175549
(71) Applicant: Hitachi Ltd., Tokyo (JP)
(72) Inventor: Hayashi, Toshimitsu Hitachi Ltd.Intell. Pty Office, Chiyoda-ku, Tokyo 100-8220 (JP); Matsumura, Hisashi Hitachi Ltd, Intell. Pty Office, Chiyoda-ku, Tokyo 100-8220 (JP); Miyazaki, Kiyomi c/o Hitachi Keiyo Eng. & Sys. Ltd, Narashino-shi, Chiba 275-0001 (JP); Horiuchi, Teruya, c/o Hitachi Info. Tech. Co., Ltd, Ashigarakami-gun, Kanagawa 259-0157 (JP)
(74) Representative: Calderbank, Thomas Roger

(57) **Abstract**

On a data terminal compatible only with a specific image data format, image data in an incompatible data format could not be viewed. In addition, on a small display screen, only small-size image data could be viewed. In response to an image data distribution request from a data terminal (130), a data distribution device (100) converts the format of image data incompatible with the data terminal (130) before transmission to the data terminal (130). In addition, the data distribution device (100) adds image operation buttons in order to send enlarged image data corresponding to any of the buttons.

## Description

The present invention relates to a data distribution device that is connected to the Internet and that distributes data.

A WWW server is one of data distribution devices that distribute data in response to data requests from the terminals connected to the Internet. The WWW server directly distributes requested data in response to a request from a data display application, called a browser, running on a data terminal. For a browser capable of displaying text data only, the WWW server converts all data to text data before distribution. In addition, a server, which converts general web pages for distribution to Internet connectable cellular phones, converts image data to text data before distribution.

Because only a specific image data format is supported on a conventional Internet connectable cellular phone, an image file in some other data format cannot be viewed on it. Also, because of a small screen size and a small amount of memory, a large image file cannot be displayed. The problem is that a large image file, if reduced, is not displayed clearly.

When a request for image data incompatible with a data terminal, such as a cellular phone, is received from the data terminal, the device according to the present invention automatically converts the format of the image data to a format compatible with the data terminal. In addition, when the data size or the display size of image data is too large to be displayed on a data terminal, the device according to the present invention automatically reduces the data size or the display size. Also, to solve the problem that a simply reduced image is not clear if displayed on a small-sized display screen, the enlarge buttons or partial-display buttons are provided to allow the user to enlarge the image on the display.

Automatically converting the format of an image to a format compatible with a data terminal 130 before transmission allows the user to view even image data incompatible with the data terminal on that terminal. In addition, detailed image data may be displayed even on a small-screen data terminal.

These and other features, objects and advantages of the present invention will become more apparent from the following description when taken in conjunction with the accompanying drawings wherein:
Fig. 1 is a diagram showing the system configuration of a data distribution system;
Fig. 2 is a flowchart showing data distribution processing;
Fig. 3 is a flowchart showing data conversion transmission processing;
Fig. 4 is a diagram showing the system configuration of an image data distribution system;
Fig. 5 is a flowchart showing real-time video data distribution processing;
Fig. 6 is a flowchart showing moving image data distribution processing;
Fig. 7 is a flowchart showing operation means addition processing;
Fig. 8 is a diagram showing data and split image data requested by a data terminal;
Fig. 9 is a diagram showing an example of data terminal display to which operation buttons are added;
Fig. 10 is a diagram showing an example of partial image data display;
Fig. 11 is a flowchart showing partial image display data distribution processing;
Fig. 12 is a diagram showing the system configuration of a data distribution system;
Fig. 13 is a diagram showing user information stored in the data distribution device;
Fig. 14 is a flowchart showing user information registration processing; and
Fig. 15 is a flowchart showing video distribution processing.

Some embodiments of the present invention will be described in detail with reference to the attached drawings.

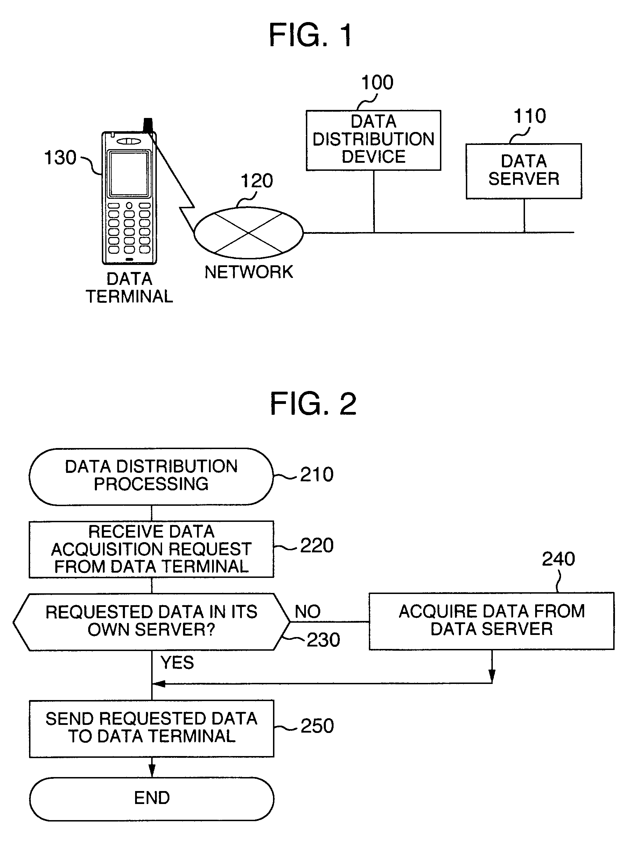

FIG. 1 is a system configuration diagram of a data distribution system. A data distribution device 100, capable of sending or receiving data over a network 120, sends data requested by a data terminal 130 over the network 120. Data to be sent may be stored in the data distribution device 100 or in another server such as a data server 110. The data server 110 is a device in which data to be sent from the data distribution device 100 is stored. The network 120 is a network such as the Internet or a LAN (Local Area Network). The data terminal 130, connectable to the network, may acquire data from the data distribution device 100 over the network 120 and display acquired data.

FIG. 2 is a flowchart of basic data distribution processing (210) performed by the data distribution device 100. The data distribution device 100 receives a data acquisition request from the data terminal 130 over the network 120 (step 220). The data distribution device 100 checks if it has the requested data in its own server 100 (step 230) and, if not, acquires data from the data server 110 (step 240). Then, the data distribution device 100 sends the acquired data to the data terminal 130 (step 250). For example, when the data distribution device 100 is a WWW server, the network is the Internet or a LAN (Local Area Network). The data terminal 130 issues a data acquisition request from a display application called a browser. In response to the data acquisition request, the WWW server 100 sends a page at the requested Internet address back to the data terminal 130 to allow the browser running on the data terminal 130 to display the page. Data requested by the data terminal includes text data, voice data, and image data.

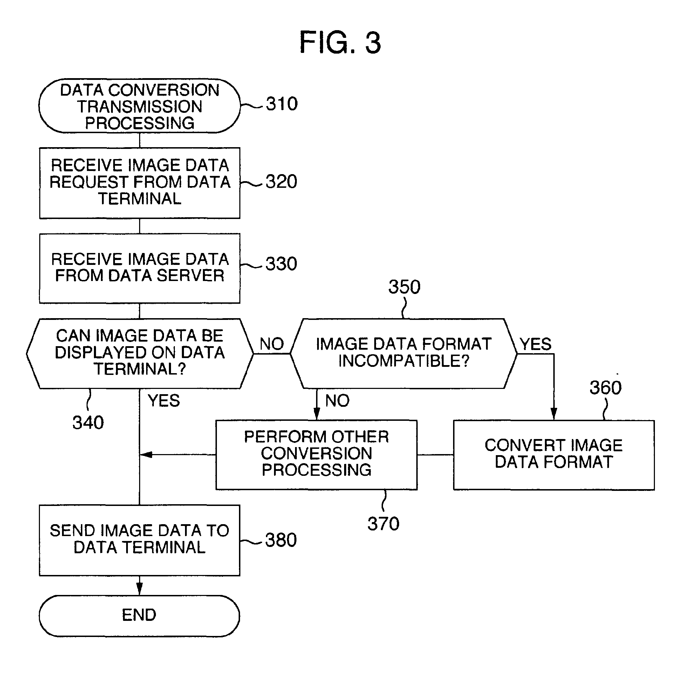

FIG. 3 is a flowchart showing data conversion transmission processing (310). From the data terminal 130, the data distribution device 100 receives a data distribution request to distribute data including image data (step 320). This data distribution request includes the attribute data on the data terminal 130. For example, when the data distribution device 100 is a WWW server to which a data distribution request is sent from the browser running on the data terminal 130, the header of the data distribution request message includes information on the browser type, data terminal type, and so on. When the requested data is in the data server 110, the data distribution device 100 acquires the requested image data from the data server (step 330). The data distribution device 100 checks if data acquired from the data server 110 may be displayed on the data terminal 130 based on the attribute information on the data terminal 130 received in step 320 (step 340). This checking may also be made based on how data terminal is connected to the data distribution device 100 or how data is specified depending on the type of the data terminal 130. For example, if a URL used by a cellular phone to connect to a web page on the Internet differs from a URL used by a personal computer to connect to a web page, the URL may be used to judge that the connection has been made from a cellular phone. If image data cannot be displayed on the data terminal (NO in step 340), a check is made to see if the image cannot be displayed because of image data format incompatibility (step 350). The image data format, if incompatible, is converted to a format in which the image data may be displayed on the data terminal 130 (step 360). If the image data format is found to be compatible in step 350 or after the image data format is converted in step 360, other conversions are performed for the image data (step 370). Other conversions include changes in image data sizes, in image data display sizes, and in the number of image data colors. The image data for which the above conversion has been made is sent to the data terminal 130 (step 380).

For the data distribution device 100 dedicated to a particular data terminal such as a cellular phone, the step (340) for checking if image data may be displayed on the data terminal 130 during the data conversion transmission processing (310) shown in FIG. 3 is not required. Instead, image data may always be converted. For example, when the data terminal 130 is a cellular phone and the system is built with the data distribution device 100 as a WWW server for cellular phones, the data terminal 130 that connects to the data distribution device 100 may be determined as a cellular phone. In this case, image data may always be converted to a format displayable on a cellular phone for transmission to it.

In this embodiment, when a request to send image data that cannot be displayed on the data terminal 130 is received, the format of image data is automatically converted to a format displayable on the data terminal 130 before transmission to the data terminal 130. This method allows the user to view the rough image of the image data that cannot be displayed on the data terminal 130. Also, this method automatically converts the format of image data to a format compatible with the data terminal 130, eliminating the need for creating image data in a format specific to each data terminal.

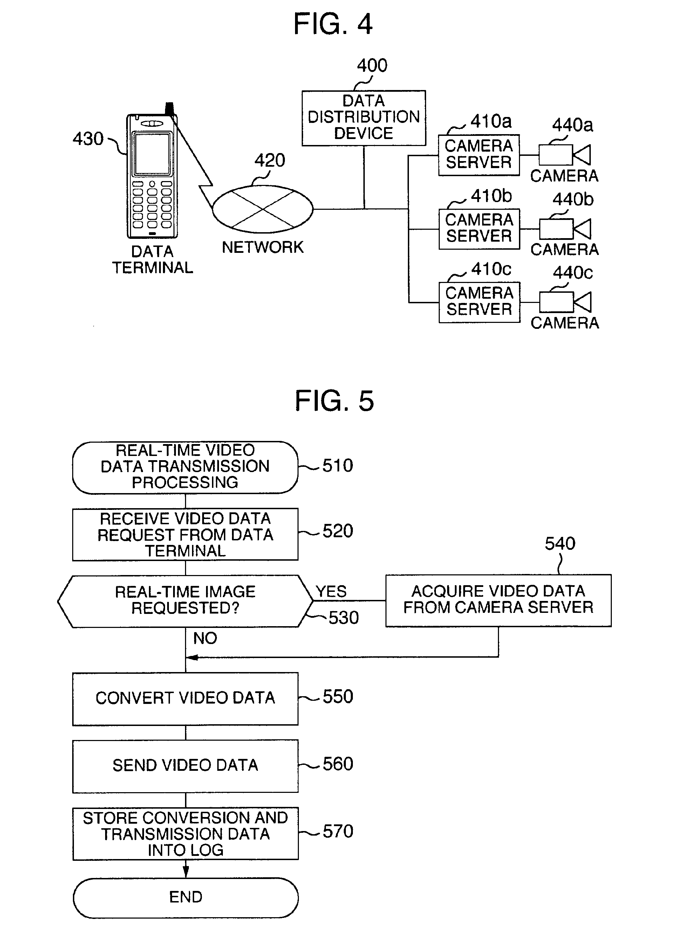

Next, a video data distribution system will be described. FIG. 4 is a diagram showing the system configuration of the video data distribution system. A camera server 410 is a device capable of storing videos captured by a camera 440 and distributing the captured videos over the network. A data distribution device 400 periodically acquires videos from the camera servers 410 and, in response to a request from a data terminal 430, sends the requested video. A network 420 is a network such as the Internet or a LAN. The data terminal 430, connectable to the network, may acquire data from the data distribution device 400 and display it.

FIG. 5 is a flowchart showing real-time video data distribution processing (510). In response to a video data request from the data terminal 430 (step 520), the data distribution device 400 checks if the terminal is requesting a real-time image (step 530). If the terminal is requesting a real-time image (Yes in step 530), the data distribution device 400 acquires from the camera server 410 a live video being captured by the camera 440 (step 540). For example, with the WWW server function on the camera server 410 for video distribution, the data distribution device 400 with the browser function could acquire video data from the camera server 410. For the camera server 410 compatible with its own protocol only, the data distribution device 400 acquires video data according to the protocol of the camera server 410. The data distribution device 400 acquires one to scores of frames of still image data, or several seconds to scores of seconds of moving image data, as video data to be acquired. The device converts video data, acquired from the camera server 410 or stored in the data distribution device 400, to data displayable on the data terminal 430 (step 550). Then, the device sends the video data to the data terminal 430 (step 560). Finally, the device stores log data such as the conversion date, size of video data before and after conversion, and the number of transmissions (step 570). If the amount of transmission data is large, text data associated with the video data or reduced-size image data may be sent instead of the video data in step 560. If the data that is sent is selected instead of the video data on the data terminal 430, the data produced by conversion in step 550 is sent. Doing so makes it possible to ask the user if it is necessary to send a large amount of data.

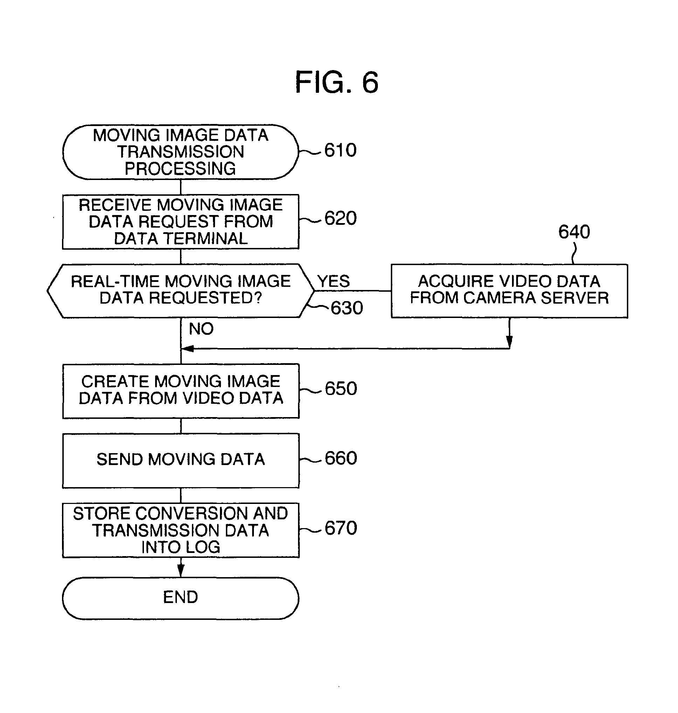

FIG. 6 is a flowchart showing moving image data distribution processing 610 in which a video captured by the camera 440 is sent to the data terminal 430 as a moving image. In response to a moving image data acquisition request from the data terminal 430 (step 620), the data distribution device 400 checks if the terminal is requesting real-time moving image data (step 630). If the terminal is requesting real-time moving image data (Yes in step 630), the device acquires a live video from the camera server 410 (step 640). From video data acquired from the camera server 410 or stored in the data distribution device 400, the device creates moving image data displayable on the data terminal 430 (step 650). For example, if the video data acquired from the camera server 410 is moving image data and if the data terminal 430 can reproduce moving image data in a format different from that of the acquired image data, the device converts the format of the moving image data to a format displayable on the data terminal 430. If the video data acquired from the camera server 410 is moving data and if the data terminal 430 can reproduce moving image data in a continuous still image display format, the device creates a plurality of still image data frames from the moving image data acquired from the camera server 410 and, from the plurality of still image data frames, creates moving image data in the continuous still image display format. If the video data acquired from the camera server 410 is still image data and if the data terminal 430 can reproduce moving image data in the continuous still image display format, the device acquires a plurality of still image data frames from the camera server 410 and, from the plurality of still image data frames, creates moving image data in the continuous still image display format. Then, the device sends the converted image data to the data terminal 430 (step 660). Finally, the device stores information on the conversion date, conversion data sizes, and other transmission records into the log (step 670).

In this embodiment, even if the data terminal 430 is incompatible with the image format of camera video distributed from the camera server 410, the user may view image data converted by the data distribution device 400. In addition, even if the camera server 410 distributes still images only, the device converts a plurality of still image frames into the continuous still image display format to allow the user to view moving images, captured by the camera 440, even on the data terminal 430.

The moving image data distribution processing 610 may also be used to split a still image into multiple pieces, to extend each piece to produce a plurality of still images and, from the extended still images, to create data in the continuous still image display format. Continuous display of the pieces created by splitting a still image as described above allows the user to view the entire image on a small-size screen, such as that of a cellular phone, without having to reduce the image.

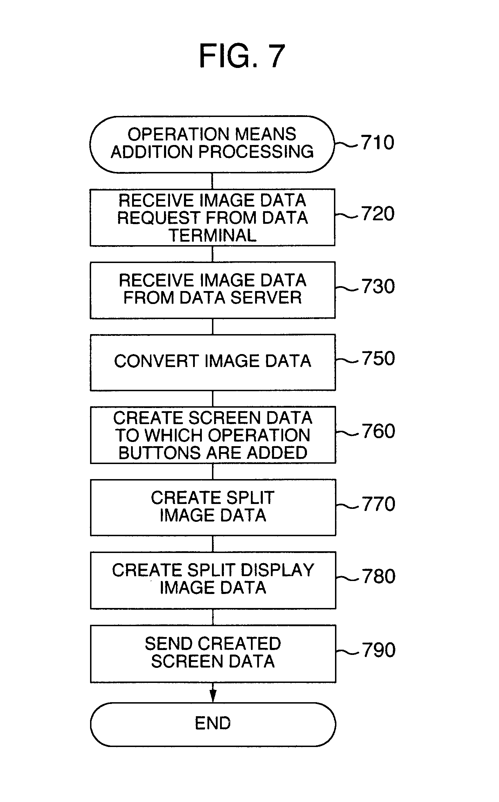

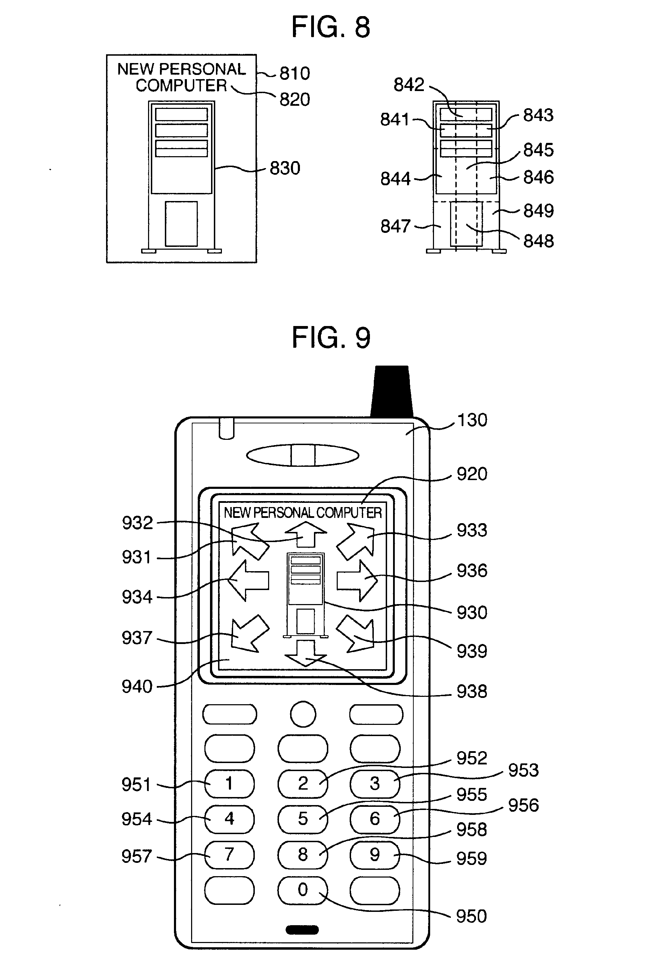

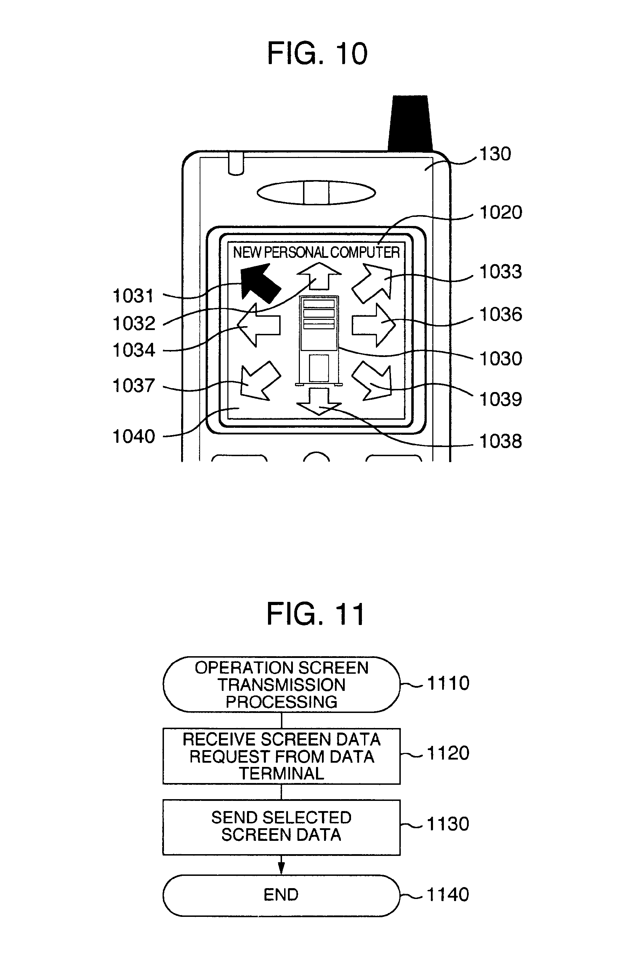

FIG. 7 is a flowchart showing operation means addition processing 710 in which a user interface is added for enabling the user to perform operation on image data distributed to the data terminal. The system configuration will be described with reference to FIG. 1. First, from the data terminal 130, the data distribution device 100 receives a request to send data 810 composed of text and image data shown in FIG. 8 (step 720). If the data 810 is in the data server 110, the data distribution device 100 acquires the data 810 from the data server 110 (step 730). Then, the device converts image data 830 (step 750). In the description below, it is assumed that the system is built such that the data distribution device 100 receives a data request only from the specific data terminal 130. Thus, judging that the data cannot be displayed on the terminal 130, the device converts the format of data to an image data format displayable on the data terminal 130 and, at the same time, converts the image display size to fit the data terminal 130 (step 750). Then, from the data 810 requested by the data terminal 130, the device creates screen display data 940 displayed on the data terminal 130 shown in FIG. 9 (step 760). Text data 920 included in the created screen display data is identical to text data 820 included in the requested data 810. Image data 930 is data generated by converting the requested image data 830 in step 750. Arrows (931-939), which are image data operation buttons, are data added by the data distribution device 100. Any of those image data operation buttons (931-939), when pressed, displays enlarged image data only in a position where the button is pressed. For example, the image data operation button 931, when selected, displays screen 1040 in FIG. 10. In addition, the image data operation buttons (931-939) are assigned numeric keys (950-959) on the data terminal 130, one for each. Selecting the image data operation button 931 is equivalent to pressing the numeric key 1 (951). To create the screen data 1040 shown in FIG. 10, the image data 830 is split into nine to create nine pieces of image data (841-849) (step 770). Then, image data operation buttons (1031-1039) are added to each of the split image data (841-849) to create split display screen data (step 780). Because the image data is split into nine in this example, nine pieces of split display screen data are created, one for each split screen. Pressing an arrow in the screen display data created in step 760 calls the corresponding split display screen data created in step 780. The created screen display data 940 is sent to the data terminal 130 (step 790). When the image data is split into nine, the numeric keys (950-959) are allocated to display the split image data (841-849). The numeric key 0, indicated by the numeral 950, is used to go back to the previous screen. To increase the number of screen splits, the numeric key 5 (955) is used as an enlarge button. In this case, to view the split images in the top, bottom, right, and left directions, the arrow in the corresponding direction is selected to scroll the screen in the arrow direction. The allocation of the numeric keys (950-959) in this case corresponds to the layout of the arrows of the image data operation buttons (931-939) in the screen display data 940.

FIG. 11 is a flowchart showing split image display data distribution processing that is performed when one of the image data operation buttons (931-939) or numeric keys (950-959) shown in FIG. 9 is pressed. When the image data operation button 931 on the data terminal 130 is pressed, the data distribution device 100 receives a screen data distribution request (step 1120). In response to the request, the data distribution device 100 sends the screen data 1040 created in step 780 in FIG. 7 to the data terminal 130 (step 1130).

In addition, the split display screen data created in step 780 in FIG. 7, which is sent to the data terminal 130 in step 790, may be split in the data terminal 130 for display. In this case, the system is built such that pressing one of the image data operation buttons (931-939) in FIG. 9 does not send a data transmission request to the data distribution device 100 but calls the split display screen data that has been sent to the data terminal 130.

In this embodiment, the data terminal has operation buttons to allow the user to view an enlarged image when the display screen on which an image is displayed is small. Those operation buttons enable the user to view detail of the image even on a data terminal with a small display screen. In addition, the data distribution device creates the split display screens, eliminating the need for the data server to prepare split display image data.

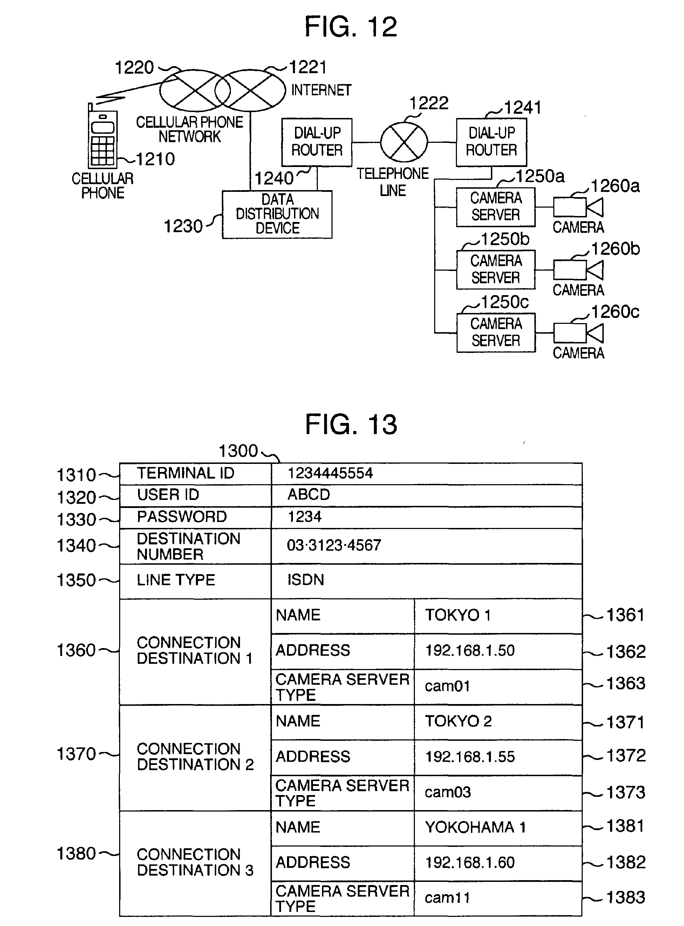

FIG. 12 is a diagram showing the configuration of a data distribution system. A cellular phone 1210 connects to a data distribution device 1230 via a cellular phone network 1220 and the Internet 1221 to allow the user to view information stored in the data distribution device 1230. In addition, the data distribution device 1230 is connected to the Internet 1221 and, via a serial cable, to a dial-up router 1240. The dial-up router 1240 connects to a dial-up router 1241 via a telephone line 1222 for data communication. Therefore, via the dial-up router 1240 and the dial-up router 1241, the data distribution device 1230 may acquire video, captured by a camera 1260, via a camera server 1250. This configuration allows the user to acquire video data in the camera server 1250, to which the cellular phone 1210 is not connected via the network, via the data distribution device 1230.

user information registration processing and video distribution processing, in which a video captured by the camera 1260 is sent to the cellular phone 1210, will be described.

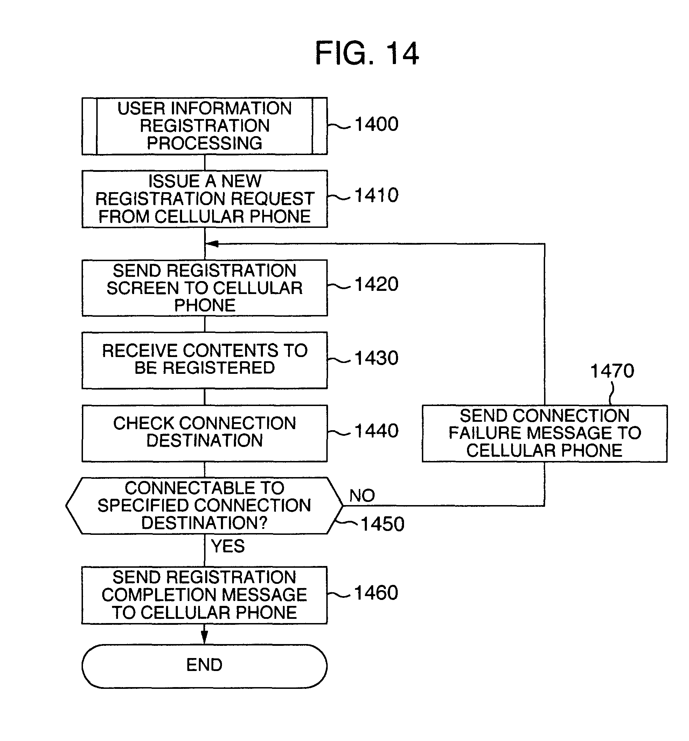

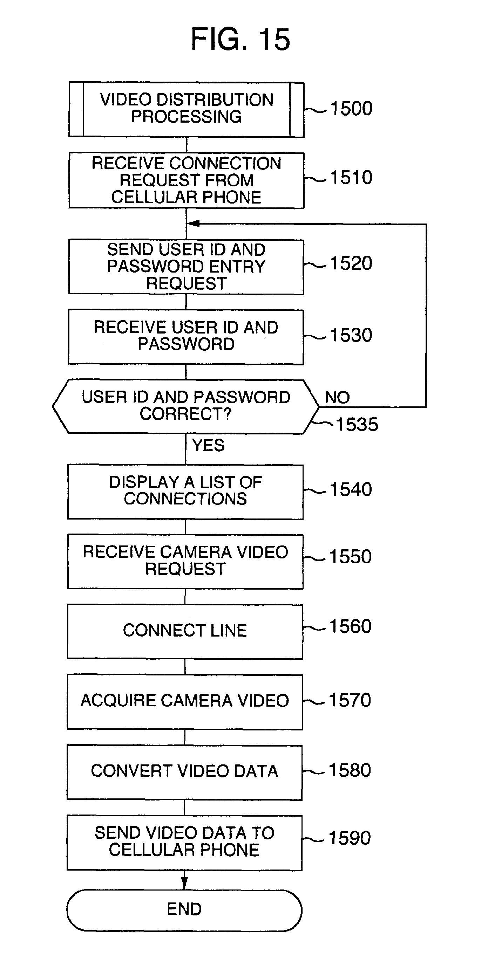

FIG. 13 is a diagram showing user information 1300 stored in the data distribution device 1230, and FIG. 14 is a flowchart showing user information registration processing 1400 in which the user information 1300 received from the cellular phone 1210 is registered with the data distribution device 1230. When the user uses the Internet connection function to connect to the data distribution device 1230 from the cellular phone 1210 to make a new registration request (step 1410), the data distribution device 1230 sends a registration screen to the cellular phone 1210 (step 1420). The contents to be registered include a user ID 1320, a password 1330, a destination number 1340, a line type 1350, a connection destination name 1361, a connection destination address 1362, a connection destination camera server 1363, and so on. A terminal ID 1310, which is received by the data distribution device 1230 when the cellular phone 1210 connects to the data distribution device 1230, is information which uniquely identifies the cellular phone 1210, such as the telephone number of the cellular phone 1210 and the terminal number of the cellular phone 1210. When the data distribution device 1230 does not receive the terminal ID 1310, it identifies the user only with the user ID and the password but does not register user information. How this information is used will be described later with reference to FIG. 15. Upon receiving the contents to be registered (step 1430), the device checks if the specified destination number 1340 and the connection destination address 1362 are correct (step 1440). To make this checking, the device makes a telephone call to the specified destination number 1340 via the dial-up router 1240 to establish the data communication route and checks if the device can connect to the connection destination address 1362. To check to see if it is possible to connect, the data distribution device 1230 issues, for example, the PING command to the connection destination address 1362 to check if a response will be returned. If the connection cannot be confirmed (No in step 1450), the device sends the connection failure message to the cellular phone 1210 (step 1470) and sends the registration screen to the cellular phone 1210 again (step 1420). If the connection can be confirmed as a result of checking (Yes in step 1450), the device sends a registration completion message to the cellular phone (step 1460) to finish the user information registration processing 1400.

FIG. 15 is a flowchart showing video distribution processing 1500 performed by the data distribution device 1230. In response to a connection request from the cellular phone 1210 (step 1510), the data distribution device 1230 sends the user ID and the password entry screen to the cellular phone 1210 (step 1520). The user ID and password entry screen is displayed on the cellular phone 1210. Then, when the user of the cellular phone 1210 enters requested data, the data distribution device 1230 receives the user ID and the password (step 1530). The device compares the received user ID and the password with the user ID 1320 and the password 1330 stored as the user information 1300 (step 1535). Although the user of the cellular phone 1210 is identified with the user ID and the password in this example, the user may be identified only with the terminal ID 1310. However, it should be noted that, when the user is identified only with the terminal ID 1310, anybody might use the cellular phone to view the video of the camera 1260. A combination of the user ID, password, and terminal ID, if used for identifying the user, would increase security. If the user ID and/or the password are invalid (No in step 1535), the device sends the user ID and password entry screen to the cellular phone 1210 again (step 1520). If the user ID and the password are valid (Yes in step 1535), the device displays a list of names (1361, 1371, 1381) of registered connection destinations 1-3 (step 1540). The user of the cellular phone 1210 selects a desired connection destination from the list of names (1361, 1371, 1381) of connection destinations 1-3. When connection destination 1 is selected on the cellular phone 1210, the device receives a message (that is, camera video request message) indicating that connection destination 1 has been selected (step 1550). The data distribution device 1230 makes a telephone call to the registered destination number 1340 via the dial-up router 1240 to establish a communication line with the dial-up router 1241 (step 1560). The data distribution device 1230 sends the camera video acquisition request to the connection destination address 1362 of connection destination 1 to acquire the video of a camera 1260a from a camera server 1250a which is connection destination 1 (step 1570). Because the camera server type 1363 of connection destination 1 (1360) is cam01, the device acquires video using the video acquisition method according to cam01. For example, when cam01 is a WWW server, the data distribution device 1230 uses the http protocol to acquire video data from the camera server 1250a. If the video data acquired from the camera server 1250a is in a format not displayable on the cellular phone 1210, the device converts the video data (step 1580). Then, the device sends the video data to the cellular phone 1210 (step 1590).

In this embodiment, the user of a cellular phone connectable to the Internet can view the video of a camera connected to a camera server not connected to the Internet. Usually, the data distribution device acquires video from a camera server connected to the Internet and converts the image before transmission to a cellular phone. However, connecting a camera server to the Internet involves the 24-hour or dial-up connection charges. The device in this embodiment establishes a line connection for data transmission only when an image acquisition request is received from a cellular phone, significantly reducing the connection charge and communication charge. The device in this embodiment enables a cellular phone user to view a video captured by an individually owned camera that cannot be connected to the Internet. Also, even if a camera is not connected to the Internet, the device in this embodiment allows the user to view the video of the camera simply by registering required information from a cellular phone.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications a fall within the ambit of the appended claims, as interpreted by the description and drawings.

## Claims

1. A data distribution device (100) connected to a communication network (120), comprising:
attribute information acquiring means for acquiring attribute information on a data terminal (130), connected to said communication network (120), in response to an image data request from said data terminal (130);
image data recognizing means for recognizing image data that may be displayed on said data terminal (130) based on the acquired attribute information on said data terminal (130);
image data converting means for converting the requested image data to image data that may be displayed on said data terminal (130) when said image data recognizing means judges that the requested image data cannot be displayed on said data terminal (130); and
data sending means for sending the converted image data to said data terminal (130).

2. A data distribution device (100) connected to a communication network (120), comprising:
setting means for setting an image data type of image data requested by a data terminal (130), connected to said communication network (120), by associating the image data type with a method for connecting said data terminal (130) to said data distribution device (100), with a data request method, with a data specification method, with a data terminal type, with types of software on said data terminal (130), or with a combination thereof;
image data converting means for converting the requested image data to the image data type that has been set; and
sending means for sending the converted image data to said data terminal (130).

3. The data distribution device (100) according to claim 1 or 2, further comprising:
means for replacing the image data, requested by said data terminal (130), with simplified data indicating the image data;
means for relating the simplified data to the requested image data;
means for adding a command that is automatically sent from said data terminal (130) to said data distribution device (100) when the simplified data is selected on said data terminal (130); and
means for sending the image data converted by said image data converting means to said data terminal (130) when the command is received.

4. The data distribution device (100) according to claim 1 or 2, further comprising:
means for recording log information, such as a date and time, a data conversion amount, a number of conversions, a number of requests, or a conversion processing time, when all or a part of the requested data is converted in response to the data request from said data terminal (130).

5. The data distribution device (100) according to claim 1 or 2,
wherein said image data converting means has a function that reduces a data size of the requested image data so that said data terminal (130) may receive the image data or a function that converts a display size of the requested image to a display size displayable on said data terminal (130).

6. The data distribution device (100) according to claim 1 or 2,
wherein said image data converting means has a function that converts an image data format to a format displayable on said data terminal (130).

7. The data distribution device (100) according to claim 1,
wherein said attribute information acquiring means has a function that acquires a display screen size of said data terminal (130) and wherein said image data converting means has an image display size converting function that enlarges, reduces, or cuts the requested image data to fit the display size of said data terminal (130).

8. The data distribution device (100) according to claim 1 or 2,
wherein, when the image data requested by said data terminal (130) is still image data and there is other still image data relating to the still image data, said image data converting means has a function that converts the image data to continuous still image display data from which a plurality of still image data pieces may be continuously displayed on said data terminal (130) automatically.

9. The data distribution device (100) according to claim 1 or 2,
wherein, when the image data requested by said data terminal (130) is still image data, said image data converting means has means for splitting the requested still image data and a function that converts the split images of the requested still image to continuous image display data in such a way that the split images of the requested still image are continuously displayed on said data terminal (130).

10. The data distribution device (100) according to claim 1 or 2,
wherein, when the image data requested by said data terminal (130) is moving image data, said image data converting means has a function that retrieves one or more still images from the moving image data and converts the retrieved still images to a data format compatible with said data terminal (130).

11. A data distribution device (100) connected to a communication network (120), comprising:
adding means for adding operation commands to data requested by a data terminal (130), said operation commands allowing said data terminal (130) to operate on all or a part of the requested data; and
sending means for sending the requested data and the added operation commands to said data terminal (130).

12. The data distribution device (100) according to claim 11,
wherein the operation commands have a function that issues an operation request from said data terminal (130) to said data distribution device (100), further comprising means for processing the operation request.

13. The data distribution device (100) according to claim 11,
wherein the operation commands have a function that executes operation processing in the data terminal (130).

14. The data distribution device (100) according to claim 12 or 13,
wherein, when image data is included in all or a part of the data requested by said data terminal (130), said operation commands have a function that enlarges or reduces the image data.

15. The data distribution device (100) according to claim 12 or 13, further comprising:
means for splitting image data when the image data is included in all or a part of the data requested by said data terminal (130), wherein the operation commands have a function that displays each of the split image data pieces on the data terminal (130).

16. A data distribution device (100) connected to a communication network (120), comprising:
acquiring means for acquiring attribute information on a network-connectable cellular phone in response to an image data request from said cellular phone;
image judging means for judging, based on the attribute information, whether said cellular phone may display the image data;
converting means for converting the image data to image data displayable on the cellular phone if said image judging means judges that the image data cannot be displayed on the cellular phone; and
sending means for sending the converted image data to said cellular phone.

17. A data distribution device (100) connected to a communication network (120), comprising:
acquiring means for acquiring attribute information on a network-connectable cellular phone in response to an image data request from said cellular phone;
judging means for judging, based on the attribute information, whether said cellular phone may display the image data;
converting means for converting the image data to displayable image data that may be displed on said cellular phone;
replacing means for replacing the requested image data with simplified data indicating the image data;
relating means for relating the simplified data to the displayable image data;
adding means for adding a command that is automatically sent from said cellular phone to said data distribution device (100) when the simplified data is selected on said cellular phone; and
sending means for sending the displayable image data to said cellular phone when the command is received.

18. A data distribution device (100) connected to a communication network (120), comprising:
adding means for adding operation commands to image data in response to an image data request from a network-connectable cellular phone, said operation commands allowing said cellular phone to operate on the image data; and
sending means for sending the image data, to which the operation commands are added, to said cellular phone.

19. The data distribution device (100) according to claim 18,
wherein the operation commands have a function that issues an operation request from said cellular phone to said data distribution device (100), further comprising means for performing processing for the operation request.

20. The data distribution device (100) according to claim 18,
wherein the operation commands have a function that executes operation processing in the cellular phone.

21. The data distribution device (100) according to claim 18 or 20, further comprising:
numeric button allocating means for allocating the operation commands to numeric buttons of said cellular phone wherein, when the operation commands have an image data enlargement function, the numeric button allocating means allocates the image data enlargement function to 5.

22. The data distribution device (100) according to claim 18 or 20, further comprising:
image splitting means for splitting the image data requested by said cellular phone; and
numeric button allocating means for allocating the operation commands to numeric buttons of said cellular phone when the operation commands have a function that displays the split image data,
wherein said numeric button allocating means allocates a top image display of the split image being displayed to 2, a bottom image display to 8, a right image display to 6, and a left image display to 4.

23. The data distribution device (100) according to claim 22,
wherein said image splitting means has a function that splits the image data into 9 and, for the numeric key buttons allocated by said numeric key allocating means, the images split into 9 are allocated to numbers 1 to 9, respectively.

24. A data distribution device (100) connected to a communication network (120), comprising:
acquiring means, connected to a camera or a camera server capable of capturing a video via the network, for acquiring the video captured by said camera or camera server;
means for receiving a camera video acquisition request from a data terminal (130);
converting means for converting the video, captured by said camera or camera server, into data displayable on said data terminal (130); and
sending means for sending the converted video data to said data terminal (130).

25. A data distribution method for use with a data distribution device (100) connected to a communication network (120), comprising the steps of:
acquiring attribute information on a data terminal (130), connected to said communication network (120), in response to an image data request from said data terminal (130);
recognizing image data that may be displayed on said data terminal (130) based on the acquired attribute information on said data terminal (130);
converting the requested image data to image data that may be displayed on said data terminal (130) when said step of recognizing image data judges that the requested image data cannot be displayed on said data terminal (130); and
sending the converted image data to said data terminal (130).

26. A data distribution method for use with a data distribution device (100) connected to a communication network (120), comprising the steps of:
adding operation commands to data requested by a data terminal (130), said operation commands allowing said data terminal (130) to operate on the requested image data; and
sending the image data and the added operation commands to said data terminal (130).

27. A data distribution method for use with a data distribution device (100) connected to a communication network (120), comprising the steps of:
acquiring attribute information on a network-connectable cellular phone in response to an image data request from said cellular phone;
judging image data, based on the attribute information, whether said cellular phone may display the image data;
converting the image data to image data displayable on the cellular phone if said step of judging image data judges that the image data cannot be displayed on the cellular phone; and
sending the converted image data to said cellular phone.

28. A data distribution method for use with a data distribution device (100) connected to a communication network (120), said data distribution device (100) being connected to a camera or a camera server capable of capturing a video via the network (120), said method comprising the steps of:
acquiring a video captured by said camera or camera server;
receiving a camera video acquisition request from a data terminal (130);
converting the video, captured by said camera or camera server, into data displayable on said data terminal (130); and
sending the converted video data to said data terminal (130).
